# EUROPEAN PATENT APPLICATION

(11) **EP 4 711 519 A1**
(43) Date of publication of application: **18.03.2026**
(21) Application number: 24803395.3
(22) Date of filing: 25.04.2024
(51) Int. Cl.: D06N 3/14, B32B 27/40, C08G 18/42, C09J 175/04

(54) **SYNTHETIC LEATHER AND METHOD FOR PRODUCING SYNTHETIC LEATHER**

(30) Priority: 11.05.2023 JP 2023078527
(71) Applicant: DIC Corporation, Tokyo 174-8520 (JP)
(72) Inventor: NONAKA Ryo, Takaishi-shi, Osaka 592-0001 (JP); UEGUCHI Miwa, Takaishi-shi, Osaka 592-0001 (JP); TETSUI Tomohiro, Takaishi-shi, Osaka 592-0001 (JP); MAEDA Ryo, Takaishi-shi, Osaka 592-0001 (JP)
(74) Representative: Kraus & Lederer PartGmbB
(86) International application number: PCT/JP2024/016183
(87) International publication number: WO 2024/232282

(57) **Abstract**

The present invention provides a synthetic leather including at least a base fabric, an adhesive layer, and a skin layer, wherein the adhesive layer is formed of a mixture containing an aqueous urethane resin composition (A) and an aqueous urethane resin composition (B) other than the aqueous resin composition (A), the aqueous urethane resin composition (A) contains a urethane resin (a1), an aqueous medium (a2), and an emulsifier (a3), the urethane resin (a1) contains a polyol compound (a1-1) containing a nonionic polyol and an aromatic polyisocyanate compound (a1-2) as essential raw materials, a urea bond concentration in the urethane resin (a1) is 100 mmol/kg or less, and the aqueous urethane resin composition (B) has a weight average molecular weight of 100000 or more. The synthetic leather has a long pot life and excellent peel strength and light resistance.

## Description

### TECHNICAL FIELD

The present invention relates to a synthetic leather and a method for producing a synthetic leather.

### BACKGROUND ART

An aqueous urethane resin composition can reduce volatile organic substances as compared with a solvent-based urethane resin composition in the related art, and thus application of the aqueous urethane resin composition to various uses such as an artificial leather, a synthetic leather, a coating agent, a glove coating and a glove film, and an adhesive as an environmentally friendly material has been studied in recent years.

Among them, an aqueous polyurethane resin-based adhesive containing an aqueous polyurethane resin (PUD) having a softening temperature of 50°C or lower and a melt viscosity of 60000 Pa·s or less at 50°C and a polyisocyanate compound is known for use in an adhesive layer of a synthetic leather (see, for example, Patent Document 1). However, a two-part adhesive in which a PUD main agent and an isocyanate crosslinking agent are combined has a short usable time (pot life) of the blended liquid, and thus it is difficult to perform stable processing, which is a problem.

Accordingly, a material having a long pot life and excellent peel strength and light resistance has been demanded.

### CITATION LIST

### PATENT DOCUMENT

Patent Document 1: JP 2000-108289 A

### SUMMARY OF INVENTION

### TECHNICAL PROBLEM

The problem to be solved by the present invention is to provide a synthetic leather including an adhesive layer having a long pot life and excellent peel strength and light resistance, and a method for producing the synthetic leather.

### SOLUTION TO PROBLEM

As a result of intensive studies to solve the above problems, the present inventors have found that the above problems can be solved by using a mixture of a specific aqueous urethane resin composition as an adhesive layer forming material, and have completed the present invention.

That is, the present invention is a synthetic leather including at least a base fabric (i), an adhesive layer (ii), and a skin layer (iii), and relates to a synthetic leather characterized in that the adhesive layer (ii) is formed of a mixture containing an aqueous urethane resin composition (A) and an aqueous urethane resin composition (B) other than the aqueous resin composition (A), the aqueous urethane resin composition (A) contains a urethane resin (a1), an aqueous medium (a2), and an emulsifier (a3), the urethane resin (a1) contains a polyol compound (a1-1) containing a nonionic polyol and an aromatic polyisocyanate compound (a1-2) as essential raw materials, a urea bond concentration in the urethane resin (a1) is 100 mmol/kg or less, and the aqueous urethane resin composition (B) has a weight average molecular weight of 100000 or more.

### ADVANTAGEOUS EFFECTS OF INVENTION

The synthetic leather of the present invention includes an adhesive layer having a long pot life and excellent peel strength and light resistance. Thus, the synthetic leather can be used as a coating agent or an adhesive, and particularly, the synthetic leather can be suitably used for an adhesive layer of a synthetic leather.

### DESCRIPTION OF EMBODIMENTS

A synthetic leather of the present invention includes at least a base fabric (i), an adhesive layer (ii), and a skin layer (iii).

Examples of the synthetic leather of the present invention include the following configurations (1) to (4).

Synthetic leather (1): a base fabric (i), an adhesive layer (ii), and a skin layer (iii)
Synthetic leather (2): a base fabric (i), an adhesive layer (ii), an intermediate layer, and a skin layer (iii)
Synthetic leather (3): a base fabric (i), a porous layer, an adhesive layer (ii), and a skin layer (iii)
Synthetic leather (4): a base fabric (i), a porous layer, an adhesive layer (ii), an intermediate layer, and a skin layer (iii)

Examples of the base fabric (i) include nonwoven fabrics, woven fabrics, and knitted fabrics made of polyester fibers, polyethylene fibers, nylon fibers, acrylic fibers, polyurethane fibers, acetate fibers, rayon fibers, polylactic acid fibers, cotton, hemp, silk, wool, glass fibers, carbon fibers, blended fibers thereof, or the like.

As the adhesive layer (ii), an adhesive layer formed of a mixture containing an aqueous urethane resin composition (A) and an aqueous urethane resin composition (B) other than the aqueous resin composition (A) is used.

As the aqueous urethane resin composition (A), a composition containing a urethane resin (a1), an aqueous medium (a2), and an emulsifier (a3) is used.

The urethane resin (a1) contains a polyol compound (a1-1) including a nonionic polyol and an aromatic polyisocyanate compound (a1-2) as essential raw materials.

Examples of the nonionic polyol include a compound having an oxyethylene structure. These nonionic polyols may be used alone or in combination of two or more types thereof. Among them, a compound having an oxyethylene structure is preferable because a synthetic leather including an adhesive layer having a long pot life and excellent peel strength and light resistance is obtained.

Examples of the compound having an oxyethylene structure include polyether polyols having an oxyethylene structure such as polyethylene glycol, polyoxyethylene polyoxypropylene glycol, polyoxyethylene polyoxytetramethylene glycol, and polyethylene glycol dimethyl ether. These compounds having an oxyethylene structure may be used alone or in combination of two or more types thereof. Among them, polyethylene glycol and polyethylene glycol dimethyl ether are preferable because a synthetic leather including an adhesive layer having a long pot life and excellent peel strength and light resistance is obtained.

The number average molecular weight of the nonionic polyol is preferably in a range of from 200 to 10000, more preferably in a range of from 300 to 3000, and still more preferably in a range of from 300 to 2000 because a synthetic leather including an adhesive layer having a long pot life and excellent peel strength and light resistance is obtained. Note that in the present invention, the number average molecular weight is a value as measured by a gel permeation chromatography (GPC) method.

The proportion of the nonionic polyol used is preferably in a range of from 1 to 30 mass%, and more preferably in a range of from 2 to 10 mass% in the polyol compound (a1-1) because a synthetic leather including an adhesive layer having a long pot life and excellent peel strength and light resistance is obtained.

As the polyol compound (a1-1), a polyol other than the nonionic polyol (hereinafter, referred to simply as "the other polyol compound") may be used, as necessary.

Examples of the other polyol compound include polyether polyol, polyester polyol, polyacryl polyol, polycarbonate polyol, and polybutadiene polyol, other than the nonionic polyol. These other polyol compounds may be used alone or in combination of two or more types thereof. Among them, polyether polyol, polyester polyol, and polycarbonate polyol are preferable because a synthetic leather including an adhesive layer having a long pot life and excellent peel strength and light resistance is obtained.

An amount of the polyol compound (a1-1) used is preferably in a range of from 40 to 90 mass% and more preferably in a range of from 50 to 80 mass% in the raw material of the urethane resin (a1) because a synthetic leather including an adhesive layer having a long pot life and excellent peel strength and light resistance can be obtained.

Examples of the aromatic polyisocyanate compound (a1-2) include phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate. These aromatic polyisocyanate compounds may be used alone or in combination of two or more types thereof. Among them, toluene diisocyanate is preferable because a synthetic leather including an adhesive layer having a long pot life and excellent peel strength and light resistance can be obtained.

An amount of the aromatic polyisocyanate compound (a1-2) used is preferably in a range of from 5 to 60 mass% and more preferably in a range of from 10 to 50 mass% in the raw material of the urethane resin (a1) because a synthetic leather including an adhesive layer having a long pot life and excellent peel strength and light resistance can be obtained.

As necessary, a polyisocyanate compound besides the aromatic polyisocyanate compound (a1-2) (hereinafter, referred to simply as "the other polyisocyanate compound") may be used in combination.

Examples of the other polyisocyanate compound include: aliphatic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate; and alicyclic diisocyanates such as norbornane diisocyanate, isophorone diisocyanate, hydrogenated xylylene diisocyanate, and hydrogenated diphenylmethane diisocyanate. These other polyisocyanate compounds may be used alone or in combination of two or more types thereof.

An amount of the other polyisocyanate compound used is preferably in a range of from 0.1 to 30 mass% and more preferably in a range of from 1 to 20 mass% in the raw material of the urethane resin (a1).

A urea bond concentration of the urethane resin (a1) is 100 mmol/kg or less, and is preferably 50 mmol/kg or less, more preferably 30 mmol/kg or less, and particularly preferably 0 mmol/kg because a synthetic leather including an adhesive layer having a long pot life and excellent peel strength and light resistance can be obtained.

An average particle diameter of the urethane resin (a1) is preferably in a range of from 0.01 to 1 µm and more preferably in a range of from 0.05 to 0.9 µm because a synthetic leather including an adhesive layer having a long pot life and excellent peel strength and light resistance can be obtained.

As the urethane resin (a1), as necessary, a chain extender having no amino group may be used in addition to the polyol compound (a1-1) and the aromatic polyisocyanate compound (a1-2). In particular, a chain extender having a hydroxyl group is preferably used because a synthetic leather including an adhesive layer having a long pot life and excellent peel strength and light resistance can be obtained.

Examples of the chain extender having a hydroxyl group include chain extenders having a hydroxyl group such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane. These chain extenders may be used alone or in combination of two or more types thereof. Among them, an aliphatic polyol compound is preferably used from the viewpoint of easily suppressing discoloration and obtaining more excellent light resistance.

A method for producing the urethane resin (a1) is not particularly limited, and the urethane resin (a1) may be produced by any method. For example, the urethane resin (a1) may be produced by a method in which all reaction raw materials containing the polyol compound (a1-1) and the aromatic polyisocyanate compound (a1-2) are reacted at once, or may be produced by a method in which the reaction raw materials are sequentially reacted. These reactions are preferably performed, for example, at a temperature of 50 to 100°C for 3 to 10 hours.

A molar ratio [(isocyanate group)/(hydroxyl group)] of the total number of moles of the hydroxyl group contained in the polyol compound (a1-1) and the hydroxyl group contained in the chain extender and the number of moles of the isocyanate group contained in the aromatic polyisocyanate compound (a1-2) is preferably in a range of from 0.80 to 1.00, and more preferably in a range of from 0.85 to 0.98.

When the urethane resin (a1) is produced, an organic solvent can also be used; however, from the viewpoint of environmental response, the reaction between the polyol compound (a1-1) and the aromatic polyisocyanate compound (a1-2) is preferably performed in the absence of a solvent.

Examples of the organic solvent include: ketone compounds such as acetone and methyl ethyl ketone; ether compounds such as tetrahydrofuran and dioxane; acetic acid ester compounds such as ethyl acetate and butyl acetate; nitrile compounds such as acetonitrile; and amide compounds such as dimethylformamide and N-methylpyrrolidone. These organic solvents may be used alone, or in combination of two or more types thereof. Note that the organic solvent is preferably removed by a distillation method or the like when the aqueous urethane resin composition is obtained.

The weight average molecular weight of the urethane resin (a1) is preferably in a range of from 2000 to 150000, more preferably in a range of from 4000 to 100000, still more preferably in a range of from 6000 to 70000, and particularly preferably in a range of from 8000 to 50000 because a synthetic leather including an adhesive layer having a long pot life and excellent peel strength and light resistance can be obtained. Note that the weight average molecular weight of the urethane resin (a1) is a value obtained by measurement by GPC in the same manner as the number average molecular weight of the polyol (a1-1).

Examples of the aqueous medium (a2) include ion-exchanged water and distilled water. These aqueous mediums may be used alone or in combination of two or more types thereof.

A mass ratio [(a1)/(a2)] of the urethane resin (a1) to the aqueous medium (a2) is preferably in a range of from 30/70 to 80/20 and more preferably in a range of from 40/60 to 70/30 because a synthetic leather including an adhesive layer having a long pot life and excellent peel strength and light resistance can be obtained.

Examples of the emulsifier (a3) include: nonionic emulsifiers such as polyoxyethylene nonylphenyl ether, polyoxyethylene lauryl ether, polyoxyethylene styrylphenyl ether, polyoxyethylene sorbitol tetraoleate, and polyethylene/polypropylene copolymer; anionic emulsifiers such as fatty acid salts such as sodium oleate, alkyl sulfate salts, alkylbenzenesulfonates, alkylsulfosuccinates, naphthalenesulfonates, polyoxyethylene alkylsulfates, sodium alkanesulfonates, and sodium alkyldiphenylether sulfonates; and cationic emulsifiers such as alkylamine salts, alkyltrimethylammonium salts, and alkyldimethylbenzylammonium salts. These emulsifiers may be used alone or in combination of two or more types thereof. Among them, an anionic emulsifier is preferable because a synthetic leather including an adhesive layer having a long pot life and excellent peel strength and light resistance can be obtained.

An amount of the emulsifier (a3) used is preferably 10 parts by mass or less, and more preferably in a range of from 0.5 to 5 per 100 parts by mass of the urethane resin (a1) because a synthetic leather including an adhesive layer having a long pot life and excellent peel strength and light resistance can be obtained.

The weight average molecular weight of the aqueous urethane resin composition (A) is preferably in a range of from 2000 to 150000 and more preferably in a range of from 4000 to 100000, because a synthetic leather including an adhesive layer having a long pot life and excellent peel strength and light resistance can be obtained.

A method for producing the aqueous urethane resin composition (A) is not particularly limited, and the aqueous urethane resin composition may be produced by any method. Examples of the method include a method in which the urethane resin (a1), the aqueous medium (a2), and the emulsifier (a3) are mixed.

Examples of the method of mixing the urethane resin (a1), the aqueous medium (a2), and the emulsifier (a3) include a method in which mixing is performed using a reactor equipped with a stirring blade; a kneading machine, such as a kneader, a continuous kneader, a taper roll, a single-screw extruder, a twin-screw extruder, a triple-screw extruder, a universal mixer, Plastomill, or a Bodeda kneading machine; a rotary dispersion mixing machine, such as a homomixer, a static mixer, Filmix, Ebara Milder, ClearMix, ULTRA-TURRAX, Cavitron, or BioMixer; an ultrasonic dispersion apparatus; or an apparatus having no moving portion and capable of mixing by the flow of a fluid itself, such as an in-line mixer.

The aqueous urethane resin composition (A) may contain another additive, as necessary.

Examples of the other additive include a surfactant, a thickener, a urethanization catalyst, a filler, a pigment, a dye, a flame retardant, a leveling agent, and an antiblocking agent. These additives may be used alone or in combination of two or more types thereof. Note that when the urethane resin (a1) is produced, it is preferable that an organic solvent is not substantially contained, but an organic solvent may be added as an additive.

Examples of the surfactant include: nonionic surfactants, such as polyoxyethylene nonylphenyl ether, polyoxyethylene lauryl ether, polyoxyethylene styrylphenyl ether, polyoxyethylene sorbitol tetraoleate, and polyethylene/polypropylene copolymer; anionic surfactants, such as fatty acid salts such as sodium oleate, alkylsulfuric acid ester salts, alkylbenzenesulfonates, alkylsulfosuccinates, naphthalenesulfonates, polyoxyethylene alkylsulfates, alkanesulfonate sodium salts, and alkyldiphenylethersulfonate sodium salts; and cationic surfactants, such as alkylamine salts, alkyltrimethylammonium salts, and alkyldimethylbenzylammonium salts.

Examples of the thickener include an associative thickener and an acid-based thickener.

Examples of the urethanization catalyst include an organotin-based catalyst and a bismuth-based catalyst.

Examples of the filler include calcium carbonate and silica.

Examples of the pigment include carbon black.

Examples of the dye include an azo-based dye.

Examples of the flame retardant include a phosphorus-based flame retardant.

Examples of the leveling agent include a silicon-based leveling agent.

Examples of the antiblocking agent include an acrylic antiblocking agent and a cellulose ester.

As the aqueous urethane resin composition (B), a composition having a weight average molecular weight of 100000 or more is used. The weight average molecular weight of the aqueous urethane resin composition (B) is preferably in a range of from 100000 to 700000 and more preferably in a range of from 150000 to 500000, because a synthetic leather including an adhesive layer having a long pot life and excellent peel strength and light resistance can be obtained. In the present invention, the weight average molecular weight is a value as measured by a gel permeation chromatography (GPC) method.

Examples of the aqueous urethane resin composition (B) include compositions containing a urethane resin (b1) and an aqueous medium (b2).

Examples of the urethane resin (b1) include those containing a polyol compound (b1-1) and a polyisocyanate compound (b1-2) as essential raw materials.

Examples of the polyol compound (b1-1) include polyether polyol, polyester polyol, polycarbonate polyol, polycaprolactone polyol, polyacrylic polyol, and silicon-modified polyol. These polyol compounds may be used alone or in combination of two or more types thereof. These polyol compounds may be those derived from petrochemical or biomass.

Examples of the polyether polyol include polyethylene glycol, polypropylene glycol, polytetramethylene glycol, polyoxyethylene polyoxypropylene glycol, and polyoxyethylene polyoxytetramethylene glycol. These polyether polyols may be used alone or in combination of two or more types thereof.

Examples of the polyester polyol include those obtained by esterifying a polycarboxylic acid and a polyhydric alcohol.

Examples of the polycarboxylic acid include: aromatic dicarboxylic acids, such as phthalic acid, isophthalic acid, terephthalic acid, naphthalenedicarboxylic acid, and esters thereof; and aliphatic dicarboxylic acids, such as succinic acid, glutaric acid, adipic acid, maleic acid, pimelic acid, suberic acid, azelaic acid, itaconic acid, sebacic acid, chlorendic acid, 1,2,4-butane-tricarboxylic acid, decanedicarboxylic acid, cyclohexanedicarboxylic acid, dimer acid, fumaric acid, and esters thereof. These polycarboxylic acids or esters thereof may be used alone or in combination of two or more types thereof.

Examples of the polyhydric alcohol include: aromatic diols, such as benzenedimethanol, toluenedimethanol, and xylenedimethanol; and aliphatic polyols, such as ethylene glycol, propylene glycol, 1,3-propylenediol, 1,4-butanediol, 1,6-hexanediol, 1,8-octanediol, diethylene glycol, triethylene glycol, cyclohexane-1,4-diol, cyclohexane-1,4-dimethanol, and neopentyl glycol ethylene glycol. These polyhydric alcohols may be used alone or in combination of two or more types thereof.

In the esterification reaction during production of the polyester polyol, an esterification catalyst is preferably used to promote the esterification reaction. Examples of the esterification catalyst include: metals, such as titanium, tin, zinc, aluminum, zirconium, magnesium, hafnium, and germanium; and metal compounds, such as titanium tetraisopropoxide, titanium tetrabutoxide, titanium oxyacetylacetonate, dibutyltin oxide, dibutyltin diacetate, dibutyltin dilaurate, tin octanoate, tin 2-ethylhexanoate, zinc acetylacetonate, zirconium tetrachloride, a zirconium tetrachloride tetrahydrofuran complex, hafnium tetrachloride, a hafnium tetrachloride tetrahydrofuran complex, germanium oxide, and tetraethoxygermanium. These esterification catalysts may be used alone or in combination of two or more types thereof.

Examples of the polycarbonate polyol include a reaction product of a carbonate ester and/or phosgene with a compound having two or more hydroxyl groups.

Examples of the carbonate ester include dimethyl carbonate, diethyl carbonate, diphenyl carbonate, ethylene carbonate, and propylene carbonate. These carbonate esters may be used alone or in combination of two or more types thereof.

Examples of the compound having two or more hydroxyl groups include ethylene glycol, propylene glycol, 1,3-propanediol, 1,4-butanediol, 1,3-butanediol, 1,2-butanediol, 2-methyl-1,3-propanediol, 1,5-pentanediol, neopentyl glycol, 1,6-hexanediol, 1,5-hexanediol, 3-methyl-1,5-pentanediol, 1,7-heptanediol, 1,8-octanediol, 1,9-nonanediol, 1,8-nonanediol, 2-ethyl-2-butyl-1,3-propanediol, 1,10-decanediol, 1,12-dodecanediol, 1,4-cyclohexanedimethanol, 1,3-cyclohexanedimethanol, trimethylolpropane, 3-methylpentanediol, neopentyl glycol, trimethylolethane, and glycerin. These compounds may be used alone or in combination of two or more types thereof.

The number average molecular weight of the polyol compound (b1-1) is preferably in a range of from 500 to 5000, because a synthetic leather including an adhesive layer having a long pot life and excellent peel strength and light resistance can be obtained.

The content of the polyol compound (b1-1) is preferably in a range of from 50 to 95 mass% and more preferably in a range of from 60 to 90 mass% in the raw material of the urethane resin (b1) because a synthetic leather including an adhesive layer having a long pot life and excellent peel strength and light resistance can be obtained.

Examples of the polyisocyanate compound (b1-2) include: aliphatic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate; alicyclic diisocyanates such as norbornane diisocyanate, isophorone diisocyanate, hydrogenated xylylene diisocyanate, and hydrogenated diphenylmethane diisocyanate; and aromatic polyisocyanates such as phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate. These polyisocyanate compounds may be used alone or in combination of two or more types thereof. Among them, hexamethylene diisocyanate, isophorone diisocyanate, toluene diisocyanate, diphenylmethane diisocyanate, and hydrogenated diphenylmethane diisocyanate are preferable because a synthetic leather including an adhesive layer having a long pot life and excellent peel strength and light resistance can be obtained.

The content of the polyisocyanate compound (b1-2) is preferably in a range of from 5 to 50 mass% and more preferably in a range of from 10 to 30 mass% in the raw material of the urethane resin (b1) because a synthetic leather including an adhesive layer having a long pot life and excellent peel strength and light resistance can be obtained.

As the urethane resin (b1), as necessary, a chain extender (b1-3) can be further used.

The chain extender (b1-3) preferably has a molecular weight of less than 500. The molecular weight of the chain extender (a3) represents a value calculated from a chemical structural formula.

Examples of the chain extender (a3) include a chain extender having a hydroxyl group and a chain extender having an amino group. These chain extenders may be used alone or in combination of two or more types thereof.

Examples of the chain extender having a hydroxyl group include aliphatic polyol compounds such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, and sorbitol; aromatic polyol compounds such as bisphenol A, 4,4'-dihydroxydiphenyl, 4,4'-dihydroxydiphenyl ether, 4,4'-dihydroxydiphenyl sulfone, hydrogenated bisphenol A, and hydroquinone; and water. These chain extenders may be used alone or in combination of two or more types thereof.

Examples of the chain extender having an amino group include ethylenediamine, 1,2-propanediamine, 1,6-hexamethylenediamine, piperazine, 2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, hydrazine, diethylenetriamine, and triethylenetetramine. These chain extenders may be used alone or in combination of two or more types thereof.

An amount of the chain extender (b1-3) used is preferably in a range of from 0.2 to 20 mass% and more preferably in a range of from 0.5 to 10 mass% in the solid content of the urethane resin composition (B) because a synthetic leather including an adhesive layer having a long pot life and excellent peel strength and light resistance can be obtained.

A method for producing the urethane resin (b1) is not particularly limited, and the urethane resin (b1) may be produced by any method. For example, the urethane resin (b1) may be produced by a method in which all reaction raw materials containing the polyol compound (b1-1), the polyisocyanate compound (b1-2), and, if necessary, the chain extender (b1-3) are reacted at once, or may be produced by a method in which the reaction raw materials are sequentially reacted. These reactions are preferably performed, for example, at a temperature of 50 to 100°C for 3 to 10 hours.

Regarding the reaction ratio of the polyol compound (b1-1), the polyisocyanate compound (b1-2), and the chain extender (b1-3), a molar ratio [(isocyanate group)/(hydroxyl group and amino group)] between the total number of moles of the hydroxyl group contained in the polyol compound (b1-1) and the hydroxyl group and the amino group contained in the chain extender (b1-3) and the number of moles of the isocyanate group contained in the polyisocyanate compound (b1-2) is preferably in a range of from 0.90 to 1.30, and more preferably in a range of from 0.95 to 1.20, because a synthetic leather including an adhesive layer having a long pot life and excellent peel strength and light resistance can be obtained.

When the urethane resin (b1) is produced, an organic solvent may be used.

Examples of the organic solvent include: ketone compounds such as acetone and methyl ethyl ketone; ether compounds such as tetrahydrofuran and dioxane; acetic acid ester compounds such as ethyl acetate and butyl acetate; nitrile compounds such as acetonitrile; and amide compounds such as dimethylformamide and N-methylpyrrolidone. These organic solvents may be used alone, or in combination of two or more types thereof. Note that the organic solvent is preferably removed by a distillation method or the like when the aqueous urethane resin composition is obtained.

As the aqueous medium (b2), those similar to those exemplified as the aqueous medium (a2) can be used, and these aqueous media can be used alone or in combination of two or more kinds.

A mass ratio [(b1)/(b2)] of the urethane resin (b1) to the aqueous medium (b2) is preferably in a range of from 30/70 to 80/20 and more preferably in a range of from 40/60 to 70/30 because a synthetic leather including an adhesive layer having a long pot life and excellent peel strength and light resistance can be obtained.

A method for producing the aqueous urethane resin composition (B) is not particularly limited, and the aqueous urethane resin composition may be produced by any method. Examples of the method include a method in which the urethane resin (b1) and the aqueous medium (b2) are mixed.

Examples of the method of mixing the urethane resin (b1) and the aqueous medium (b2) include a method in which mixing is performed using a reactor equipped with a stirring blade; a kneading machine, such as a kneader, a continuous kneader, a taper roll, a single-screw extruder, a twin-screw extruder, a triple-screw extruder, a universal mixer, Plastomill, or a Bodeda kneading machine; a rotary dispersion mixing machine, such as a homomixer, a static mixer, Filmix, Ebara Milder, ClearMix, ULTRA-TURRAX, Cavitron, or BioMixer; an ultrasonic dispersion apparatus; or an apparatus having no moving portion and capable of mixing by the flow of a fluid itself, such as an in-line mixer.

The aqueous urethane resin composition (B) may contain another additive, as necessary.

As the other additives, those similar to those exemplified as the other additives described above can be used, and the other additives can be used alone or in combination of two or more kinds.

A mixing ratio of the aqueous urethane resin composition (A) and the aqueous urethane resin composition (B) is preferably in a range of from 51/49 to 97/3, more preferably in a range of from 60/40 to 95/5, because a synthetic leather including an adhesive layer having a long pot life and excellent peel strength and light resistance can be obtained.

The thickness of the adhesive layer (ii) is, for example, in a range of from 30 to 60 µm.

Examples of the material for forming the skin layer (iii) (hereinafter, sometimes referred to as "skin layer-forming resin") include known aqueous urethane resins, solvent-based urethane resins, solventless urethane resins, aqueous acrylic resins, silicone resins, polypropylene resins, and polyester resins. These materials may be used alone or in combination of two or more types thereof.

A surface treatment layer may be further provided on the skin layer (iii) for the purpose of preventing damage and the like. Examples of the material for forming the surface treatment layer include known aqueous urethane resins, solvent-based urethane resins, solventless urethane resins, aqueous acrylic resins, silicone resins, polypropylene resins, polyester resins, and vinyl chloride resins. These materials may be used alone or in combination of two or more types thereof.

As the porous layer, a layer formed of a solvent-based urethane resin composition by a known wet film-forming method; a layer obtained by making an aqueous urethane resin composition porous by a known method; a layer obtained by foaming a solvent-free urethane resin composition by a known method; or the like can be used.

Examples of the material for forming the intermediate layer include known aqueous urethane resins, solvent-based urethane resins, solventless urethane resins, aqueous acrylic resins, silicone resins, polypropylene resins, polyester resins, and vinyl chloride resins. These materials may be used alone or in combination of two or more types thereof.

A method for producing the synthetic leather is not particularly limited, and the synthetic leather may be produced by any method. For example, there are exemplified a method (1) in which a skin layer-forming resin is applied on a release-treated base material and dried to obtain a skin layer (iii), then the aqueous urethane resin composition of the present invention is applied on the skin layer (iii) and dried to form an adhesive layer (ii), and then the adhesive layer (ii) is bonded to a base fabric (i); and a method (2) in which a skin layer-forming resin is applied on a release-treated base material and dried to obtain a skin layer (iii), and then the aqueous urethane resin composition of the present invention is applied on the skin layer (iii) and bonded to a base fabric (i), followed by drying to form an adhesive layer (ii); and the like.

Examples of the method for applying the skin layer-forming resin and the aqueous urethane resin composition include methods using an applicator, a roll coater, a spray coater, a T-die coater, a knife coater, a comma coater, or the like.

After the synthetic leather is produced, it may be aged at 30 to 100°C for 1 to 10 days, for example, as necessary.

### EXAMPLES

The present invention will be specifically described with reference to Examples and Comparative Examples below. Note that the present invention is not limited to the following Examples.

The weight average molecular weight of the aqueous urethane resin composition and the number average molecular weight of the polyol compound used in Examples and Comparative Examples are values measured under the following conditions by a gel permeation chromatography (GPC) method.

Measurement apparatus: high-speed GPC apparatus ("HLC-8220GPC" available from Tosoh Corporation)
Column: The following columns available from Tosoh Corporation were connected in series and used.
"TSKgel G5000" (7.8 mm I. D. × 30 cm) × 1 column
"TSKgel G4000" (7.8 mm I. D. × 30 cm) × 1 column
"TSKgel G3000" (7.8 mm I. D. × 30 cm) × 1 column
"TSKgel G2000" (7.8 mm I. D. × 30 cm) × 1 column
Detector: RI (differential refractometer)
Column temperature: 40°C
Eluent: tetrahydrofuran (THF)
Flow rate: 1.0 mL/min
Injection volume: 100 µL (tetrahydrofuran solution with a sample concentration of 0.4 mass%)
Standard sample: A calibration curve was created using the following standard polystyrenes.

### (Standard Polystyrene)

"TSKgel Standard Polystyrene A-500" available from Tosoh Corporation
"TSKgel Standard Polystyrene A-1000" available from Tosoh Corporation
"TSKgel Standard Polystyrene A-2500" available from Tosoh Corporation
"TSKgel Standard Polystyrene A-5000" available from Tosoh Corporation
"TSKgel Standard Polystyrene F-1" available from Tosoh Corporation
"TSKgel Standard Polystyrene F-2" available from Tosoh Corporation
"TSKgel Standard Polystyrene F-4" available from Tosoh Corporation
"TSKgel Standard Polystyrene F-10" available from Tosoh Corporation
"TSKgel Standard Polystyrene F-20" available from Tosoh Corporation
"TSKgel Standard Polystyrene F-40" available from Tosoh Corporation
"TSKgel Standard Polystyrene F-80" available from Tosoh Corporation
"TSKgel Standard Polystyrene F-128" available from Tosoh Corporation
"TSKgel Standard Polystyrene F-288" available from Tosoh Corporation
"TSKgel Standard Polystyrene F-550" available from Tosoh Corporation

### (Synthesis Example 1: Preparation of aqueous urethane resin composition (A1))

In a four-necked flask equipped with a stirrer, a reflux condenser, a thermometer, and a nitrogen introduction tube, 1000 parts by mass of polyether polyol ("PTMG1000" available from Mitsubishi Chemical Corporation, number average molecular weight: 1000, hereinafter referred to simply as "PTMG1000"), 61 parts by mass of methoxypolyethylene glycol ("UNIOX M1000" available from NOF CORPORATION, number average molecular weight: 1000, hereinafter referred to simply as "MPEG"), and 163 parts by mass of toluene diisocyanate (hereinafter referred to simply as "TDI") were reacted at 120°C for 3 hours under a nitrogen gas stream to obtain a urethane resin (a1) ([NCO]/[OH] ratio: 0.90). Next, the urethane resin (a1) heated to 70°C, 141 parts by mass of a 35 mass% aqueous solution of sodium alkylnaphthalenesulfonate ("PELEX NBL" available from Kao Corporation), and 309 parts by mass of water were mixed, and then water was further added to finally obtain an aqueous urethane resin composition (A1) having a urethane resin content of 50 mass%. The urea bond group concentration in this aqueous urethane resin composition (A1) was 0 mmol/kg.

### (Synthesis Example 2: Preparation of aqueous urethane resin composition (B1))

In a four-necked flask equipped with a stirrer, a reflux condenser, a thermometer, and a nitrogen introduction tube, 1000 parts by mass of polyether polyol ("PTMG2000" available from Mitsubishi Chemical Corporation, number average molecular weight; 2000, hereinafter abbreviated as "PTMG2000"), 24 parts by mass of 2,2-dimethylolpropionic acid (hereinafter, abbreviated as "DMPA"), and 262 parts by mass of dicyclohexylmethane diisocyanate (hereinafter, abbreviated as "HMDI") were reacted at 100°C in the presence of 0.1 parts by mass of stannous octylate under a nitrogen gas stream until NCO% reached 2.1 mass% to obtain the urethane resin (b1). Subsequently, 25 parts by mass of triethylamine, 322 parts by mass of a 20 mass% aqueous solution of sodium dodecylbenzenesulfonate ("NEOGEN S-20F" available from DKS Co. Ltd.), and 670 parts by mass of water were mixed with the urethane resin (b1) heated to 70°C. Thereafter, a water diluted solution of isophoronediamine (hereinafter, abbreviated as "IPDA") having an amino group content corresponding to 95% of the NCO group was immediately added to cause chain extension, so that an aqueous urethane resin composition (B1) having a urethane resin content of 50 mass% was finally obtained.

### (Example 1: Production of synthetic leather (1))

A blended liquid containing 100 parts by mass of an aqueous urethane resin composition for a skin layer ("HYDRAN WLS-250" available from DIC Corporation), 10 parts by mass of a water-dispersible black pigment ("Dirac HS-9530" available from DIC Corporation), and 1 part by mass of an associative thickener ("HYDRAN ASSISTER T10" available from DIC Corporation) was applied onto a flat release paper ("DN-TP-155T" available from Ajinomoto Co., Inc.) in such a manner that the thickness of the film after drying was 30 µm, and dried at 70°C for 2 minutes and further at 120°C for 2 minutes. Next, 90 parts by mass of the aqueous urethane resin composition (A1) obtained in Synthesis Example 1 and 10 parts by mass of the aqueous urethane resin composition (B1) obtained in Synthesis Example 2 were mixed, 14 parts by mass of a polyisocyanate-based crosslinking agent (BURNOCK DNW-5500 available from DIC Corporation) was added to the mixture, and the mixture was stirred and mixed for 5 minutes to obtain a blended liquid. The blended liquid was applied to have a solid film thickness of 50 µm, and dried at 90°C for 3 minutes. After laminating with a T/R raised fabric, the laminate was heat-treated at 130°C for 10 minutes, and the release paper was peeled off to obtain a synthetic leather (1).

### (Examples 2 to 5: Production of synthetic leathers (2) to (5))

Synthetic leathers (2) to (5) were obtained in the same manner as in Example 1 except that the blending amounts of the "aqueous urethane resin composition (A1)" and the "aqueous urethane resin composition (B1)" used in Example 1 were changed as shown in Table 1.

### (Comparative Example 1: Production of synthetic leather (R1))

A synthetic leather (R1) was obtained in the same manner as in Example 1 except that the blending amounts of the "aqueous urethane resin composition (A1)" and the "aqueous urethane resin composition (B1)" used in Example 1 were changed as shown in Table 1.

### [Method for measuring DRY peel strength]

On each of the synthetic leathers obtained in Examples and Comparative Examples, a 2.5 cm-wide hot melt tape ("BW-2" available from San Chemicals, Ltd.) was placed and heated at 150°C for 3 minutes for adhesion. The sample was cut along the width of the hot melt tape. A part of the sample was peeled off, the base material and the hot melt tape were sandwiched between chucks, and the peel strength was measured with an autograph ("AG-1" available from Shimadzu Corporation) and evaluated in accordance with the following criteria.

A: The peel strength was 3.5 kgf/25 mm or more.
B: The peel strength was 2.5 kgf/25 mm or more and less than 3.5 kgf/25 mm.
C: The peel strength was less than 2.5 kgf/25 mm.

### [Method for measuring WET peel strength]

On each of the synthetic leathers obtained in Examples and Comparative Examples, a 2.5 cm-wide hot melt tape ("BW-2" available from San Chemicals, Ltd.) was placed and heated at 150°C for 3 minutes for adhesion. The sample was cut along the width of the hot melt tape. The sample was immersed in water at 23°C for 3 hours, then a part of the sample was peeled off, the base material and the hot melt tape were sandwiched between chucks, and the peel strength was measured with an autograph ("AG-1" available from Shimadzu Corporation) and evaluated in accordance with the following criteria.

A: The peel strength was 3.5 kgf/25 mm or more.
B: The peel strength was 2.5 kgf/25 mm or more and less than 3.5 kgf/25 mm.
C: The peel strength was less than 2.5 kgf/25 mm.

### Method for evaluating pot life

To 100 parts by mass of each of the aqueous urethane resin compositions (A1) and (B1) obtained in Synthesis Example, 10 parts by mass of a polyisocyanate-based crosslinking agent (BURNOCK DNW-5500 available from DIC Corporation) was added, and the mixture was allowed to stand at 40°C for 4 hours. Thereafter, a synthetic leather was prepared in the same manner as Example 1. On this synthetic leather, a 2.5 cm-wide hot melt tape ("BW-2" available from San Chemicals, Ltd.) was placed and heated at 150°C for 3 minutes for adhesion. Then, the sample was cut along the width of the hot melt tape. A part of the sample was peeled off, the base material and the hot melt tape were sandwiched between chucks, and the peel strength was measured with an autograph ("AG-1" available from Shimadzu Corporation) and evaluated in accordance with the following criteria.

A: The peel strength was 3.5 kgf/25 mm or more.
B: The peel strength was 2.5 kgf/25 mm or more and less than 3.5 kgf/25 mm.
C: The peel strength was less than 2.5 kgf/25 mm.

### Method for evaluating light resistance

The synthetic leathers obtained in Examples and Comparative Examples were irradiated with light for 100 hours using a fade meter "U48AU" (63°C, humidity 50%) available from Suga Test Instruments Co., Ltd. Thereafter, the synthetic leathers were visually observed and evaluated in accordance with the following criteria.

A: There was no change in appearance.
B: Slight yellowing was observed in the appearance.
C: Significant yellowing was observed in the appearance.

The blending amounts and evaluation results of the aqueous urethane resin compositions of the adhesive layer forming materials of the synthetic leathers (1) to (5) and (R1) and (R2) obtained in the above Examples and Comparative Examples are shown in Tables 1 and 2.

**[Table 1]**

| Table 1 | | Example 1 | Example 2 | Example 3 | Example 4 | Example 5 | Comparative Example 1 |
|---|---|---|---|---|---|---|---|
| Synthetic leather | | (1) | (2) | (3) | (4) | (5) | (R1) |
| PUD Formulation in adhesive layer forming material | Aqueous urethane resin composition (A1) | 95 | 90 | 80 | 70 | 60 | 100 |
| | Aqueous urethane resin composition (A2) | 5 | 10 | 20 | 30 | 40 | 0 |
| Evaluation item | DRY peel strength | A | A | A | A | B | A |
| | WET peel strength | B | A | A | B | B | C |
| | Pot life | A | A | A | A | A | A |
| | Light resistance | A | A | A | A | A | A |

Examples 1 to 5 shown in Table 1 are examples using the synthetic leather of the present invention. It was confirmed that these adhesive layers of the synthetic leather had a long pot life and were excellent in peel strength and light resistance.

On the other hand, Comparative Example 1 described in Table 1 is an example of a synthetic leather in which the aqueous urethane resin composition (B) is not used as the adhesive layer forming material. It was confirmed that the adhesive layer of the synthetic leather had a remarkably insufficient WET peel strength.

## Claims

1. A synthetic leather comprising at least a base fabric (i), an adhesive layer (ii), and a skin layer (iii),
wherein the adhesive layer (ii) is formed of a mixture containing an aqueous urethane resin composition (A) and an aqueous urethane resin composition (B) other than the aqueous resin composition (A);
the aqueous urethane resin composition (A) contains a urethane resin (a1), an aqueous medium (a2), and an emulsifier (a3);
the urethane resin (a1) contains a polyol compound (a1-1) containing a nonionic polyol and an aromatic polyisocyanate compound (a1-2) as essential raw materials;
a urea bond concentration in the urethane resin (a1) is 100 mmol/kg or less; and
the aqueous urethane resin composition (B) has a weight average molecular weight of 100000 or more.

2. The synthetic leather according to claim 1, wherein a mixing ratio of the aqueous urethane resin composition (A) and the aqueous urethane resin composition (B) is in a range of from 51/49 to 97/3.

3. The synthetic leather according to claim 1, wherein the aromatic polyisocyanate compound (a1-2) is toluene diisocyanate.

4. The synthetic leather according to claim 1 or 2, wherein the emulsifier (a3) contains an anionic emulsifier.

5. The synthetic leather according to claim 1, wherein an amount of the emulsifier (a3) used is 10 parts by mass or less per 100 parts by mass of the urethane resin (a1).

6. A method for producing the synthetic leather described in any one of claims 1 to 5, wherein the urethane resin (a1) is obtained by reacting a raw material containing the polyol compound (a1-1) and the aromatic polyisocyanate compound (a1-2) in the absence of a solvent.
